# FASCICULE DE BREVET EUROPEEN

(11) **EP 1 177 613 B1**
(45) Date de publication et mention de la délivrance du brevet: **26.02.2003**
(21) Numéro de dépôt: 00925438.4
(22) Date de dépôt: 11.05.2000
(51) Int. Cl.: H02M 3/335

(54) **SYSTEME D'ALIMENTATION A PARTIR D'UNE LIGNE TELEPHONIQUE**
TELEFONLEITUNGSGESPEISTES STROMVERSORGUNGSSYSTEM
TELEPHONE-LINE BASED POWER SUPPLY SYSTEM

(30) Priorité: 12.05.1999 FR 9906242; 25.01.2000 FR 0000927
(43) Date de publication de la demande: 06.02.2002
(73) Titulaire: Ascom Monétel SA, 07500 Guilherand-Granges (FR)
(72) Inventeur: HAMMER, Emeric, F-26500 Bourg-Les-Valence (FR)
(74) Mandataire: de Beaumont, Michel
(86) Numéro de dépôt international: FR0001279
(87) Numéro de publication internationale: WO00070732

(56) Documents cités:
- EP-A- 0 687 098
- WO-A-97/38516
- DE-A- 19 837 919
- FR-A- 2 754 414
- US-A- 4 961 220
- US-A- 5 160 851
- US-A- 5 317 545
- US-A- 5 675 480
- US-A- 5 781 621

## Description

La présente invention concerne l'alimentation électrique d'appareils connectés à une ligne téléphonique. Une alimentation de ce type est connue du document DE 19837919.

Il existe en permanence une tension aux bornes d'une ligne téléphonique et il est donc tentant pour des utilisateurs de circuits couplés à la ligne téléphonique d'utiliser l'alimentation disponible sur les lignes téléphoniques pour alimenter les appareils qu'ils souhaitent coupler à cette ligne. Toutefois ceci pose problème car les gestionnaires des réseaux téléphoniques imposent que la consommation sur la ligne soit très faible. En France, par exemple, les téléphones publics doivent pouvoir fonctionner avec une puissance maximale de 150 mW.

Ainsi, pour alimenter une charge à partir d'une ligne téléphonique, on a proposé de disposer aux bornes d'un redresseur connecté à la ligne téléphonique, un condensateur de très forte valeur destiné à accumuler de l'énergie pour une charge. Néanmoins, cette solution amène à utiliser des condensateurs de très grandes dimensions qui sont coûteux et encombrants. Ainsi, de telles alimentations sont peu utilisées.

Un autre problème que l'on rencontre dans le domaine des téléphones alimentés exclusivement par leur connexion à une ligne téléphonique est lié à la sécurité des usagers de ce téléphone. Ce problème se rencontre en particulier dans le cas (par exemple des téléphones publics) où le téléphone n'est pas réellement relié à la terre. Le téléphone est alors susceptible de subir les conséquences de perturbations sur la ligne telles que des éclairs, des courants de sonnerie (40 à 130 volts efficaces par rapport à la terre) ou des contacts accidentels de la ligne téléphonique à une haute tension (par exemple, le secteur).

Pour satisfaire aux normes de sécurité des usagers, les parties en contact avec ce dernier doivent bénéficier d'une isolation par rapport à ces hautes tensions. En pratique, on prévoit une isolation supportant 1,5 kilovolts efficaces par rapport aux parties accessibles côté ligne, ce qui représente approximativement un isolement de 1,5 mm dans l'air.

Ces contraintes sont généralement respectées pour l'équipement lui-même, c'est-à-dire que l'utilisateur n'est en pratique en contact qu'avec des éléments isolés, généralement en plastique (par exemple, le combiné et le clavier). Toutefois, un problème d'isolement particulier se pose pour les appareils à carte, par exemple, les téléphones publics propres à recevoir des cartes téléphoniques prépayées. Dans un tel cas, si l'utilisateur emploie une carte téléphonique appropriée, celle-ci est en matière plastique et ne pose pas de problème d'isolement. Toutefois, un utilisateur peut accidentellement introduire une carte au même format dont le substrat est conducteur. Dans un tel cas, l'appareil téléphonique ne permet pas une protection adéquate de l'utilisateur qui peut être soumis aux surtensions accidentelles par l'intermédiaire de la carte qu'il manipule.

Une difficulté particulière que l'on rencontre dans le cas des téléphones dépourvus d'alimentation autonome est que les solutions d'isolement habituelles ne sont pas immédiatement transposables. En particulier, une solution prévoyant de couper la ligne téléphonique au moyen d'un relais, dès que l'on détecte la présence d'une carte inappropriée dans le poste téléphonique, est inapplicable pour des raisons de consommation énergétique incompatible avec le défaut d'alimentation secteur.

Une autre difficulté est que, pour respecter les contraintes d'isolement, la protection de l'usager doit être effectuée au niveau du poste téléphonique et non au niveau de centraux ou de sous-répartiteurs distants, ce qui laisserait subsister une portion de ligne jusqu'au poste téléphonique.

En outre, la fonction de protection de l'utilisateur doit rester compatible avec le maintien de l'alimentation des autres fonctions du téléphone public, ne serait-ce que pour permettre un retour à la normale quand le problème de surtension disparaît.

Selon un premier aspect, un objet de la présente invention est de prévoir un système d'alimentation d'une charge à partir d'une ligne téléphonique qui soit particulièrement simple, qui permette un stockage d'une énergie importante et une restitution d'une énergie importante même en période de pointe sans excéder les contraintes de la ligne téléphonique.

La présente invention s'applique plus particulièrement à des appareils tels que des répondeurs, des téléalarmes, des systèmes de télémétrie, des modulateurs/démodulateurs (modem), des terminaux de paiement, des téléphones à paiement par carte ou autre.

Dans cette dernière application, la présente invention a, selon un deuxième aspect, pour objet de proposer un système d'alimentation d'une charge à partir d'une ligne téléphonique qui soit compatible avec des contraintes d'isolement de la ligne par rapport à un utilisateur. Plus particulièrement, l'invention vise à permettre un strict respect des contraintes de sécurité et, notamment, celles liées à l'introduction d'une carte ou autre objet conducteur mettant l'utilisateur en relation électrique avec un contacteur du poste téléphonique.

Selon ce deuxième aspect et pour atteindre ces objets, la présente invention prévoit un système d'alimentation d'une charge à partir d'une ligne téléphonique comprenant : un redresseur connecté aux bornes de la ligne ; une alimentation à découpage comprenant en sortie une masse distincte de sa masse en entrée, la charge étant connectée à la sortie de l'alimentation à découpage ; et un microcontrôleur propre à commander notamment l'alimentation à découpage et dont la masse correspond à la masse d'entrée de l'alimentation à découpage.

Selon un mode de réalisation de la présente invention, une inductance de l'alimentation à découpage constitue le primaire d'un transformateur d'isolement galvanique entre la tension de sortie à destination de la charge et une tension d'alimentation du système.

Selon un mode de réalisation de la présente invention, des moyens de commande d'un interrupteur de l'alimentation à découpage sont alimentés au moyen d'un régulateur linéaire abaisseur de tension.

Selon un mode de réalisation de la présente invention, un signal de régulation de l'alimentation à découpage traverse une barrière d'isolement au moyen d'un élément d'isolation galvanique ou analogue.

Selon un mode de réalisation de la présente invention, le microcontrôleur est connecté à un circuit de détection de sonnerie.

Selon un mode de réalisation de la présente invention, le système comporte en outre un processeur, indépendamment du microcontrôleur, ce processeur étant propre à communiquer avec le microcontrôleur par l'intermédiaire de signaux transitant par un moyen d'isolement galvanique ou analogue.

Selon un mode de réalisation de la présente invention, le système comprend également : un condensateur de stockage alimenté par le redresseur en série avec un premier commutateur ; et une batterie rechargeable connectée aux bornes du redresseur en série avec un deuxième commutateur, une borne d'alimentation du microcontrôleur étant connectée au condensateur et pouvant être connectée à la borne de la batterie par l'intermédiaire d'un troisième commutateur, le microcontrôleur comprenant en outre des moyens pour détecter des états du système et pour commander notamment, les premier, deuxième et troisième commutateurs.

Selon un mode de réalisation de la présente invention, le condensateur de stockage est en série avec un limiteur de courant.

Selon un mode de réalisation de la présente invention, le système est implanté dans un équipement téléphonique de type téléphone public comprenant un lecteur de carte à puce.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique, un système d'alimentation selon un premier aspect de la présente invention ;
la figure 2 représente de façon un peu plus détaillée mais encore très schématique un système d'alimentation selon la présente invention ;
la figure 3 représente, de façon schématique et partiellement, un mode de réalisation d'un système d'alimentation selon le deuxième aspect de la présente invention ; et
la figure 4 représente de façon un peu plus détaillée mais encore très schématique un mode de réalisation d'une alimentation à découpage selon la présente invention.

Les mêmes éléments ont été désignés par les mêmes références aux différentes figures. Pour des raisons de clarté, seuls les éléments du système d'alimentation qui sont nécessaires à la compréhension de l'invention ont été représentés aux figures et seront décrits par la suite. En particulier, le système d'alimentation est décrit en faisant référence à des blocs fonctionnels quand la constitution interne de ces blocs est à la portée de l'homme du métier à partir de telles indications.

Dans les figures, les lignes en traits pleins représentent des trajets de courants d'alimentation et les lignes en traits pointillés représentent des trajets de signaux de commande.

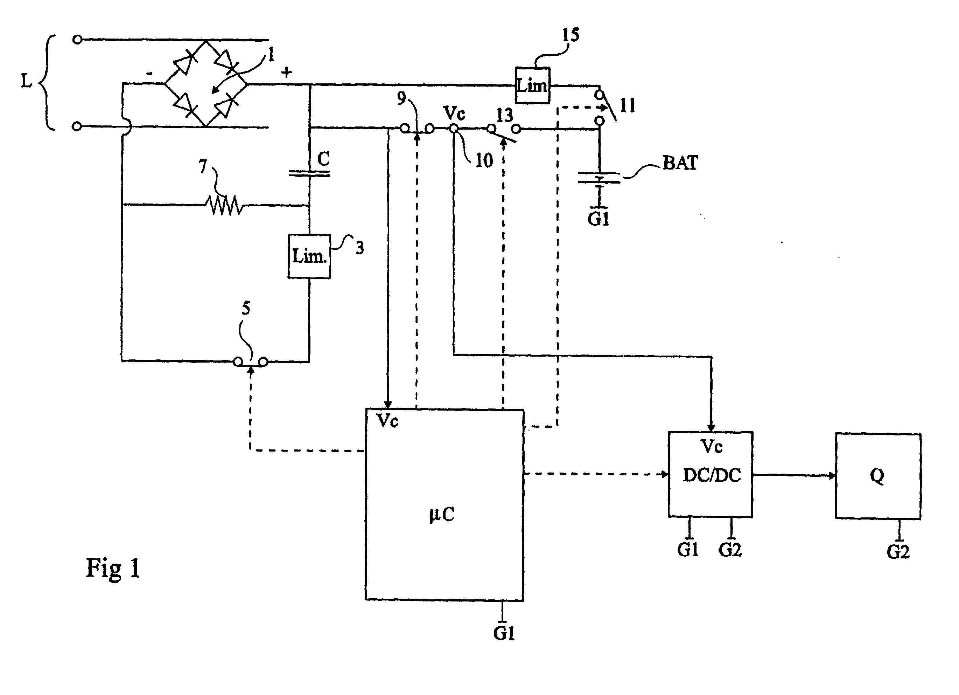

Comme l'illustre la figure 1, la présente invention s'applique à une ligne téléphonique L. Un redresseur est connecté aux bornes de cette ligne téléphonique, par exemple un pont de diodes 1. La borne positive du pont est connectée à un condensateur C en série avec un commutateur électronique 5 dont la deuxième borne est reliée à la borne négative du pont, et éventuellement avec un dispositif de limitation de courant 3. Une résistance de fuite de forte valeur 7 est connectée entre la deuxième borne du condensateur C et la borne négative du pont. La borne de commande du commutateur 5 est commandée par un microcontrôleur µC.

La borne positive du condensateur est connectée à la borne d'alimentation du microcontrôleur µC. Cette borne positive est reliée par l'intermédiaire d'un commutateur 9 à une borne d'alimentation 10 du système à une tension Vc. Le commutateur 9 est commandé par une sortie du microcontrôleur.

Les commutateurs 5 et 9 sont normalement fermés. Ainsi, dès que le système est connecté à la ligne téléphonique, le condensateur C se charge par l'intermédiaire du limiteur de courant 3, ou par l'intermédiaire de la résistance de fuite 7 si le limiteur de courant ne fonctionne pas en l'absence de commande du microcontrôleur. Dès que la tension aux bornes du condensateur devient suffisante, le microcontrôleur est alimenté et commande d'une part le limiteur d'autre part le commutateur 5 pour que le condensateur se charge à une tension déterminée. Par exemple, le microcontrôleur se met à fonctionner dès que la tension VC dépasse 1,8 volts et ensuite ce microcontrôleur gère l'interrupteur 5 et/ou le limiteur 3 pour que la tension aux bornes du condensateur C soit légèrement inférieure à 7 volts.

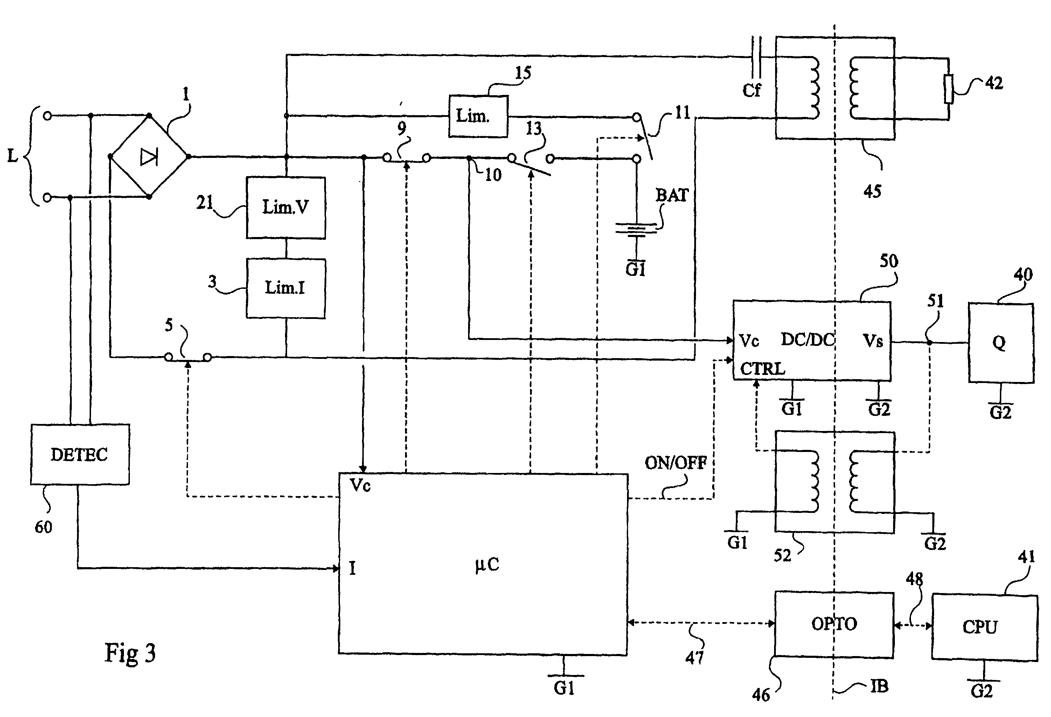

La borne 10 est également connectée à un convertisseur continu-continu, par exemple une alimentation à découpage DC/DC. L'alimentation à découpage est commandée par le microcontrôleur et alimente une charge Q. Selon un avantage de l'utilisation d'une telle alimentation à découpage, celle-ci peut comporter un primaire à la masse G1 du système d'alimentation et du microcontrôleur et un secondaire à la masse G2 de la charge, comme on le verra par la suite en relation avec la figure 3 décrivant le deuxième aspect de la présente invention.

Dans ce qui précède, on a décrit un système dans lequel l'alimentation est assurée par la charge stockée aux bornes d'un condensateur C et régulée par un microcontrôleur µC agissant sur des commutateurs 5 et 9.

Selon le premier aspect de l'invention, il est en outre prévu d'associer au système une batterie rechargeable BAT connectée entre la borne d'alimentation positive du pont 1 et la masse G1, en série avec un commutateur électronique normalement ouvert 11. La borne positive de la batterie est en outre connectée à la borne 10 par l'intermédiaire d'un autre commutateur normalement ouvert 13.

Comme on l'a vu précédemment, le système est initialisé par la charge du condensateur C qui demeure ensuite la source principale d'alimentation du système. Le microcontrôleur dispose notamment de moyens pour surveiller la charge du condensateur. Quand celui-ci est complètement chargé, le commutateur 11 est fermé de sorte que la batterie rechargeable se charge par l'intermédiaire d'un limiteur de courant 15. Cette charge peut être soumise à d'autres conditions, par exemple se produire pendant des heures de faible utilisation de la ligne téléphonique. Ensuite, lors du fonctionnement du système, le microcontrôleur gérera la fermeture du commutateur 13 et éventuellement l'ouverture du commutateur 9 quand la charge aura besoin d'une pointe d'énergie.

Le système selon le premier aspect de la présente invention présente de nombreux avantages par rapport à l'utilisation d'un condensateur de stockage seul ou d'une batterie seule.

Un autre avantage du système mixte est que le système continue à fonctionner si la batterie est morte ou comme on l'a vu précédemment si la batterie n'est initialement pas chargée.

Un autre avantage est que, en cas de défaillance de la ligne téléphonique, ceci peut être détecté par le microcontrôleur qui isole immédiatement le condensateur et met l'ensemble du système en veille sous la seule alimentation de la batterie et/ou du condensateur. Notamment, on peut alors conserver des données éventuellement critiques mémorisées dans le microcontrôleur.

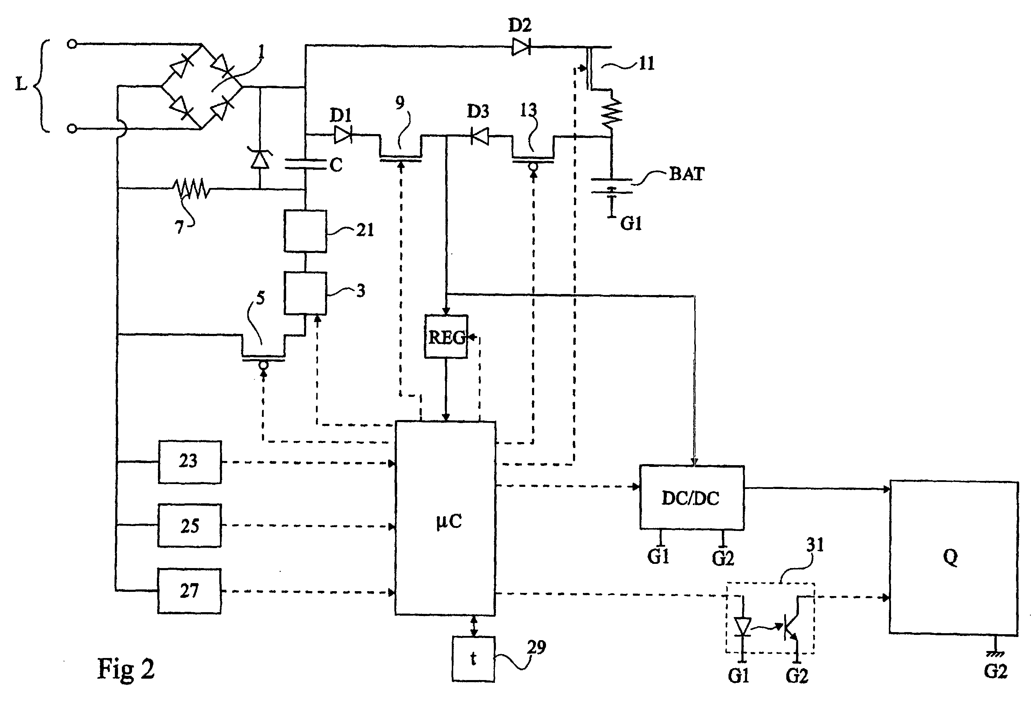

La figure 2 représente le schéma de la figure 1 sous forme un peu plus détaillée. On retrouve en figure 2 :
- le pont redresseur 1,
- le condensateur C,
- le limiteur 3 commandé par le microprocesseur,
- le commutateur 5 constitué d'un transistor MOS à canal N,
- la résistance de fuite 7,
- le commutateur 9 constitué d'un transistor MOS à canal P, en série avec une diode D1,
- le microcontrôleur µC,
- le commutateur 11 constitué d'un transistor MOS à canal P, en série avec une diode D2,
- la batterie rechargeable BAT,
- le commutateur 13 constitué d'un transistor MOS à canal P, en série avec une diode D3,
- un convertisseur DC-DC, tel qu'une alimentation à découpage,
- une charge ou système à alimenter Q.

En outre, on a représenté en série avec le condensateur C et le limiteur 3, une inductance électronique 21 destinée à bloquer le courant alternatif et à réduire les ondulations de tension ainsi que divers blocs de détection, par exemple un bloc de détection de tension de sonnerie 23, un bloc de détection d'inversion de polarité au montage 25, un bloc de détection de coupure de ligne 27, un bloc destiné à avoir une fonction d'horodateur 29. Le bloc horodateur fera en pratique de préférence partie intégrante du microcontrôleur. L'heure pourra être rechargée par une commande manuelle ou par des signaux envoyés sur la ligne téléphonique. En outre, le couplage entre le microcontrôleur et la charge peut se faire par l'intermédiaire d'un optocoupleur 31 pour permettre une commande logique d'éléments de la charge tout en respectant les consignes d'isolement. Le système pourra également comprendre un détecteur de signal de sonnerie, des moyens de récupération de l'énergie de sonnerie, et des moyens de fourniture d'une sonnerie modulable.

Bien entendu, et bien que cela ne soit pas représenté, on prévoira des moyens de mesure de la tension aux bornes du condensateur et des moyens de mesure de la tension aux bornes de la batterie. Ces mesures peuvent par exemple être effectuées périodiquement.

Ainsi, le système selon la présente invention est un système particulièrement souple permettant d'optimiser les dimensions d'un condensateur de stockage et d'une batterie rechargeable, tout en assurant une gestion de l'ensemble du système par un microcontrôleur qui est initialement alimenté sous l'effet du condensateur et qui peut ensuite être maintenu à l'état chargé sous l'effet de la batterie rechargeable. Le microcontrôleur permet notamment d'optimiser les conditions de charge du condensateur et de la batterie.

La figure 3 représente un mode de réalisation d'un système d'alimentation mettant en oeuvre le deuxième aspect de l'invention. Le mode de réalisation illustré par la figure 3 reprend également les fonctions d'optimisation d'une batterie rechargeable en assurant une gestion de l'ensemble du système par un microcontrôleur initialement alimenté sous l'effet d'un condensateur, lié au premier aspect exposé précédemment. On notera toutefois que le deuxième aspect de l'invention qui sera décrit par la suite peut être mis en oeuvre indépendamment du premier aspect.

Une caractéristique de la présente invention selon ce deuxième aspect est de prévoir un isolement galvanique (ou analogue) entre les équipements susceptibles d'être en contact avec l'utilisateur et la ligne téléphonique. Plus précisément, selon l'invention, on prévoit une barrière d'isolement IB la plus proche possible des parties de l'équipement téléphonique qui sont en contact avec l'utilisateur. Dans l'exemple de la figure 3, ces différents équipements alimentés ont été symbolisés par une charge 40 (Q), un microprocesseur 41 ou unité centrale de traitement (CPU), et un bloc 42 symbolisant les éléments téléphoniques (par exemple le combiné) et/ou le modem. Dans cet exemple, on peut considérer que la charge 40 est constituée par les circuits de transfert d'informations entre une carte à puce prépayée et le reste du terminal. Bien que les liaisons correspondantes n'aient pas été indiquées, on notera que le processeur 41 communique généralement avec les éléments téléphoniques 42 et avec la charge 40 pour en contrôler le fonctionnement. Le recours à un processeur 41 distinct, en aval de la barrière d'isolement IB par rapport à la ligne L, est lié au besoin de régulation des stockages de tension en amont et en aval de cette barrière d'isolement, et au besoin de préserver l'alimentation de la plupart des fonctions de l'équipement téléphonique même en cas d'apparition d'une surtension sur la ligne.

Côté ligne L, le circuit illustré par la figure 3 reprend pour l'essentiel les éléments décrits précédemment en relation avec la figure 1, à savoir un pont de redressement 1, un microcontrôleur µC et, dans l'exemple représenté, les différents commutateurs 5, 9, 13 et 11 liés au premier aspect de l'invention ainsi qu'une batterie BAT. De préférence, les sorties redressées du pont 1 sont reliées l'une à l'autre par l'intermédiaire de dispositifs 21 et 3 de limitation de la tension (Lim.V) et du courant (Lim.I). Pour le fonctionnement lié à la présence de la batterie rechargeable BAT, le circuit de la figure 3 comprend en outre le limiteur de courant 15 (Lim).

Le transfert des informations relatives à la communication téléphonique proprement dite (voix ou données à transmettre au modem) transite par l'intermédiaire d'un élément d'isolement galvanique 45 dont le primaire est connecté entre les sorties redressées du pont 1 avec interposition en série d'un condensateur Cs d'élimination de la composante continue éventuelle. Le secondaire du moyen d'isolement 45 est connecté aux éléments téléphoniques symbolisés par la charge 42. Le transformateur 45 est généralement connu sous la dénomination de transformateur de téléphonie et sert essentiellement à transférer les signaux alternatifs avec une adaptation d'impédance à 600 ohms pour la téléphonie. Un tel transformateur de téléphonie est parfaitement classique.

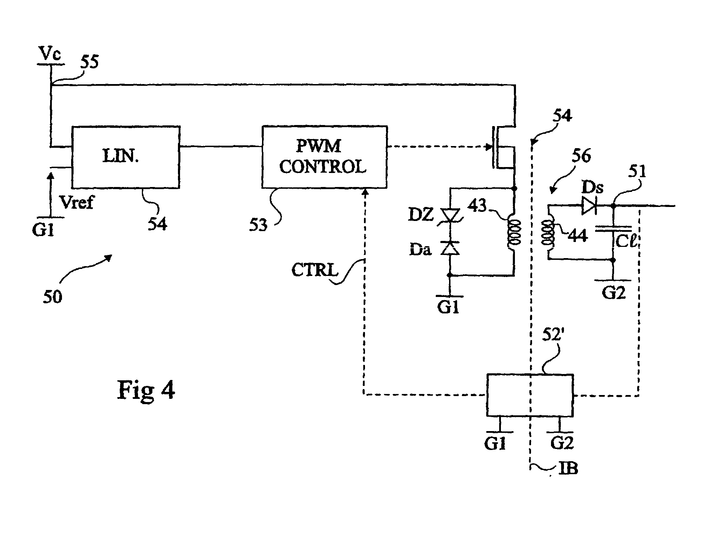

Selon l'invention, le circuit 50 d'alimentation à découpage recevant la tension Vc par une connexion à la borne 10 est du type à barrière d'isolement, c'est-à-dire que la tension continue de sortie Vs que délivre le circuit 50 sur une borne 51 est référencée par rapport à la masse G2 de la charge alors que la tension Vc est référencée à la masse G1. Un exemple plus détaillé de circuit d'alimentation à découpage 50 sera décrit par la suite en relation avec la figure 4.

Selon l'invention, la régulation de l'alimentation à découpage 50 s'effectue également par l'intermédiaire d'une isolation galvanique ou analogue. Dans l'exemple représenté à la figure 3, on utilise un transformateur d'isolement 52 dont le primaire est connecté entre la borne 51 et la masse G2 et dont le secondaire est connecté entre une borne CTRL d'asservissement de l'alimentation à découpage 50 et la masse G1. Le circuit 50 est en outre commandé par le microcontrôleur au moyen d'un signal ON/OFF d'activation/désactivation.

Une autre caractéristique de l'invention selon ce deuxième aspect est que le microcontrôleur µC est susceptible de communiquer directement avec le processeur 41 côté charge 40 en traversant la barrière d'isolement IB entre l'équipement côté ligne et côté utilisateur. Dans l'exemple de la figure 3, on utilise un ou plusieurs optocoupleurs 46 entre des liaisons 47 côté microcontrôleur et des liaisons 48 côté CPU 41. Le recours à des optocoupleurs est ici suffisant en raison de la faible puissance des signaux échangés entre le microcontrôleur et le processeur 41 qui sont des signaux de commande et de consigne. Par conséquent, le recours à un transformateur d'isolement de type inductif n'est pas nécessaire.

Une autre caractéristique de la présente invention selon son deuxième aspect est de prévoir une activation du système uniquement en cas de besoin. Ceci dans le but d'optimiser le bilan énergétique du téléphone en raison de son absence d'alimentation autonome (sauf, le cas échéant, quand il est pourvu d'une batterie). Pour ce faire, on prévoit un circuit 60 de détection de sonnerie (DETEC) et de récupération d'énergie, en amont du pont redresseur 1. La récupération d'énergie sur le signal de sonnerie s'effectue en amont du pont redresseur pour permettre le respect des impédances qui doivent être présentées au signal de sonnerie. Le circuit 60, qui diffère dans ce mode de réalisation du détecteur 23 de la figure 2, comporte deux bornes d'entrée reliées aux deux conducteurs de la ligne L en amont du pont redresseur 1, et au moins une borne de sortie reliée au microcontrôleur µC. Cette borne a pour rôle, non seulement de fournir une indication sur la présence d'un signal de sonnerie, mais également de fournir une alimentation au moins temporaire.

A l'inverse, si la ligne téléphonique disparaît (soit par coupure physique, soit par interruption de la communication), le système doit se mettre au moins dans une phase de veille, c'est-à-dire de consommation minimale d'énergie s'il est équipé d'une batterie ou, de préférence, s'éteindre. Pour cela, on prévoit un détecteur (27, figure 2) non représenté en figure 3 de coupure de la ligne. Le microcontrôleur µC informe alors le processeur 41 par l'intermédiaire de la liaison isolée 47, 46, 48. A titre de variante, l'unité centrale 41 peut détecter la disparition de la fourniture d'énergie aux bornes de l'élément téléphonique 42 et, le cas échéant, informer en retour le microcontrôleur.

Un avantage du recours à une alimentation à découpage par rapport à un régulateur linéaire pour le bloc 50 est que l'on peut alors utiliser l'inductance de l'alimentation à découpage comme élément primaire du transformateur d'isolement comme on le verra par la suite en relation avec la figure 4.

Un autre avantage est que le bilan énergétique (rendement d'une alimentation à découpage) est meilleur que celui d'un régulateur linéaire dans la plage de courants de fonctionnement (par exemple, de 1 à 200 mA sous une tension primaire pouvant varier de 3 à 7 volts) généralement utilisés pour alimenter la charge. De plus, une alimentation à découpage 50 permet un meilleur rendement qu'un régulateur linéaire en raison des fluctuations de la tension d'entrée (tension de ligne).

La figure 4 représente un schéma partiel plus détaillé du bloc d'alimentation à découpage 50 selon un mode de réalisation préféré de la présente invention. Selon ce mode de réalisation, le circuit 53 (PWM CONTROL) de commande d'un interrupteur 54 de puissance de l'alimentation à découpage est lui-même alimenté par l'intermédiaire d'un régulateur linéaire (LIN) 54. Le rôle de ce régulateur linéaire 54 est d'alimenter le bloc 53 sous une tension minimale (la plus faible possible). Par exemple, alors que la tension Vc peut être de l'ordre de 5 à 7 volts pour obtenir un rendement correct de l'alimentation à découpage en fonction de la tension requise en aval, la tension du circuit de commande 53 peut être limitée à 2-3 volts.

De façon classique pour une alimentation à découpage, l'interrupteur de puissance 54 (par exemple, un transistor MOS) est connecté, en série avec un élément inductif 43 entre une borne 55 d'application de la tension Vc et la masse G1. Une diode Da est associée en parallèle avec l'inductance L pour jouer le rôle de diode de roue libre. Dans l'exemple de la figure 4, cette diode Da est connectée en série avec une diode Zener DZ dont le rôle est de limiter la tension aux bornes de l'inductance 43, toujours dans le souci d'améliorer le bilan énergétique (et ici de protéger l'inductance 43).

Comme cela a été indiqué précédemment, l'inductance 43 constitue le primaire d'un transformateur d'isolement 56 destiné à traverser la barrière IB. Ainsi, le secondaire 44 du transformateur d'isolement 56 est connecté en parallèle avec un condensateur C1 de filtrage de la tension obtenue, une diode Ds étant reliée entre une première borne de l'enroulement 44 et la borne 51 constituant la première électrode du condensateur C1. L'autre électrode du condensateur C1 est reliée à la masse G2 avec la deuxième borne de l'enroulement 44.

En figure 4, on a représenté le moyen d'isolement du signal d'asservissement sous la forme d'un bloc 52' illustrant une variante de réalisation sous la forme d'un optocoupleur. On notera en effet, qu'en raison de la faible puissance du signal d'asservissement, celui-ci n'est pas nécessairement constitué d'un transformateur.

Côté régulateur linéaire 54, celui-ci délivre la tension d'alimentation du bloc 53 à partir de la tension vc prélevée sur la borne 55 et d'une tension de référence Vref qui lui est fournie de façon classique pour un régulateur linéaire.

Bien entendu, la présente invention est susceptible de diverses variantes et modifications qui apparaîtront à l'homme de l'art. En particulier, la réalisation pratique des différents constituants du système d'alimentation de l'invention est à la portée de l'homme du métier à partir des indications fonctionnelles données ci-dessus. De même, son adaptation aux différents niveaux de tension souhaités ainsi qu'aux différents éléments à alimenter en aval de la barrière d'isolement est modifiable en fonction de l'application.

De plus, d'autres connexions sont possibles en aval de la barrière d'isolement. Un avantage du recours à une telle barrière d'isolement sur l'ensemble des signaux est en particulier de permettre la connexion d'autres équipements (par exemple, de prises de raccordement d'appareils de maintenance en aval de la barrière d'isolement dans le cas d'un téléphone public).

En outre, si l'invention trouve un intérêt tout particulier dans le cas des téléphones publics disposant d'un lecteur de cartes à puce où les problèmes de sécurité de l'utilisateur sont pour l'instant critiques, celle-ci pourra être mise en oeuvre dans toute application où des problèmes similaires se posent.

## Revendications

1. Système d'alimentation d'une charge (40) à partir d'une ligne téléphonique (L) comprenant :
un redresseur (1) connecté aux bornes de la ligne ;
une alimentation à découpage (50) comprenant en sortie une masse (G2) distincte de sa masse en entrée (G1), la charge étant connectée à la sortie de l'alimentation à découpage ; et
un microcontrôleur (µC) propre à commander notamment l'alimentation à découpage et dont la masse correspond à la masse d'entrée de l'alimentation à découpage.

2. Système selon la revendication 1, **caractérisé en ce qu'**une inductance (43) de l'alimentation à découpage (50) constitue le primaire d'un transformateur (56) d'isolement galvanique entre la tension de sortie (Vs) à destination de la charge (40) et une tension (Vc) d'alimentation du système.

3. Système selon la revendication 2, **caractérisé en ce que** *des* moyens de commande (53) d'un interrupteur (54) de l'alimentation à découpage (50) sont alimentés au moyen d'un régulateur linéaire (54) abaisseur de tension.

4. Système selon l'une quelconque des revendications 1 à 3, **caractérisé en ce qu'**un signal de régulation (CTRL) de l'alimentation à découpage (50) traverse une barrière d'isolement (IB) au moyen d'un élément (52, 52') d'isolation galvanique ou analogue.

5. Système selon l'une quelconque des revendications 1 à 4, **caractérisé en ce que** le microcontrôleur (µC) est connecté à un circuit de détection de sonnerie (60).

6. Système selon l'une quelconque des revendications 1 à 5, **caractérisé en ce qu'**il comporte en outre un processeur (41), indépendamment du microcontrôleur (µC), ce processeur étant propre à communiquer avec le microcontrôleur par l'intermédiaire de signaux transitant par un moyen (46) d'isolement galvanique ou analogue.

7. Système selon l'une quelconque des revendications 1 à 6, **caractérisé en ce qu'**il comprend également :
un condensateur de stockage (C) alimenté par le redresseur en série avec un premier commutateur (5) ; et
une batterie rechargeable (BAT) connectée aux bornes du redresseur (1) en série avec un deuxième commutateur (11),
une borne d'alimentation du microcontrôleur (µC) étant connectée au condensateur et pouvant être connectée à la borne de la batterie par l'intermédiaire d'un troisième commutateur (13), le microcontrôleur comprenant en outre des moyens pour détecter des états du système et pour commander notamment, les premier, deuxième et troisième commutateurs.

8. Système selon la revendication 7, **caractérisé en ce que** le condensateur de stockage (C) est en série avec un limiteur de courant (3).

9. Système d'alimentation selon l'une quelconque des revendications 1 à 8, **caractérisé en ce qu'**il est implanté dans un équipement téléphonique de type téléphone public comprenant un lecteur de carte à puce.

## Patentansprüche

1. System zur Belieferung einer Last (40) von einer Telefonleitung (L), wobei folgendes vorgesehen ist:
ein an die Leitung angeschalteter Gleichrichter (1);
eine Leistungsversorgung (50) der geschalteten Betriebsart einschließlich einer Erde (G2) an ihrem Ausgang, und zwar unterschiedlich von ihrer Eingangserde (G1), wobei die Last mit dem Ausgang der Leistungsversorgung der geschalteten Betriebsart verbunden ist;
ein Microcontroller (Microsteuervorrichtung) (µC) geeignet zur Steuerung von insbesondere der Leistungsversorgung mit geschalteter Betriebsart, wobei die Erde des Microcontrollers der Eingangserde der Leistungsversorgung mit geschalteter Betriebsart entspricht.

2. System nach Anspruch 1, **dadurch gekennzeichnet, daß** eine Induktivität (43) der Leistungsversorgung (50) der geschalteten Betriebsart die Primärseite eines galvanischen Trenntransformators (56) bildet, und zwar zwischen der für die Last (40) vorgesehenen Ausgangsspannung (Vs) und einer Versorgungsspannung (Vc) des Systems.

3. System nach Anspruch 2, **dadurch gekennzeichnet, daß** Steuermittel (53) eines Schalters (54) der Leistungsversorgung (50) der geschalteten Betriebsart mittels eines Spannungsherabstufungs-Linearregulators (54) versorgt werden.

4. System nach einem der Ansprüche 1 bis 3, **dadurch gekennzeichnet, daß** ein Regulierungssignal (CTRL) der Leistungsversorgung (50) mit geschalteter Betriebsart eine Isolationsbarriere (IB) mittels eines galvanischen Isolations- oder Trennelements (52, 52') oder dergleichen kreuzt.

5. System nach einem der Ansprüche 1 bis 4, **dadurch gekennzeichnet, daß** der Microcontroller (µC) mit einer Läutdetektionsschaltung (60) verbunden ist.

6. System nach einem der Ansprüche 1 bis 5, **dadurch gekennzeichnet, daß** ferner ein Prozessor (41) vorgesehen ist, und zwar unabhängig vom Microcontroller (µC), wobei dieser Prozessor geeignet ist, um mit dem Micocontroller über Signale in Verbindung zu stehen, die durch galvanische Isolations- oder Trennmittel (46) oder dergleichen gehen.

7. System nach einem der Ansprüche 1 bis 6, **dadurch gekennzeichnet, daß** ferner folgendes vorgesehen ist:
ein Speicherkondensator (C) beliefert durch den Gleichrichter in Serie mit einem ersten Schalter (5); und
eine wieder aufladbare Batterie (BAT) angeschaltet an den Gleichrichter 1 in Serie mit einem zweiten Schalter (11), wobei ein Versorgungsanschluß des Microcontrollers (µC) mit dem Kondensator verbunden ist und verbindbar ist mit der Batterieklemme oder dem Batterieanschluß über einen dritten Schalter (13), wobei ferner der Microcontroller Mittel aufweist, um die Zustände des Systems zu detektieren und insbesondere um die ersten, zweiten und dritten Schalter zu steuern.

8. System nach Anspruch 7, **dadurch gekennzeichnet, daß** der Speicherkondensator (C) in Serie mit einem Strombegrenzer (3) liegt.

9. Versorgungssystem nach einem der Ansprüche 1 bis 8, **dadurch gekennzeichnet, daß** es in eine Telefoneinrichtung der Art eines öffentlichen Telefons einschließlich eines Smartcard-Lesers eingebaut oder implantiert ist.

## Claims

1. A system for supplying a load (40) from a telephone line (L) including:
a rectifier (1) connected across the line;
a switched-mode power supply (50) including at its output a ground (G2) distinct from its input ground (G1), the load being connected to the output of the switched-mode power supply; and
a microcontroller (µC) adapted to controlling in particular the switched-mode power supply, the ground of the microcontroller corresponding to the input ground of the switched-mode power supply.

2. The system of claim 1, **characterized in that** an inductance (43) of the switched-mode power supply (50) forms the primary of a galvanic isolation transformer (56) between the output voltage (Vs) intended for the load (40) and a supply voltage (Vc) of the system.

3. The system of claim 2, **characterized in that** control means (53) of a switch (54) of the switched-mode power supply (50) are supplied by means of a voltage step-down linear regulator (54).

4. The system of any of claims 1 to 3, **characterized in that** a signal of regulation (CTRL) of the switched-mode power supply (50) crosses an isolation barrier (IB) by means of a galvanic isolation element (52, 52') or the like.

5. The system of any of claims 1 to 4, **characterized in that** the microcontroller (µC) is connected to a ringing detection circuit (60).

6. The system of any of claims 1 to 5, **characterized in that** it further includes a processor (41), independently from the microcontroller (µC), this processor being adapted to communicating with the microcontroller via signals transiting through a galvanic isolation means (46) or the like.

7. The system of any of claims 1 to 6, **characterized in that** it also includes:
a storage capacitor (C) supplied by the rectifier in series with a first switch (5); and
a rechargeable battery (BAT) connected across the rectifier (1) in series with a second switch (11),
a supply terminal of the microcontroller (µC) being connected to the capacitor and being connectable to the battery terminal via a third switch (13), the microcontroller further including means for detecting states of the system and for especially controlling the first, second, and third switches.

8. The system of claim 7, **characterized in that** the storage capacitor (C) is in series with a current limiter (3).

9. The supply system of any of claims 1 to 8, **characterized in that** it is implanted in a telephone equipment of public phone type including a smart card reader.
